Europäisches Patentamt

European Patent Office

Office européen des brevets

(19)

(11) Veröffentlichungsnummer: **0 191 325 B1**

(12) **EUROPÄISCHE PATENTSCHRIFT**

(45) Veröffentlichungstag der Patentschrift: **13.11.91**

(51) Int. Cl.⁵: **C01B 25/22**

(21) Anmeldenummer: 86100777.1

(22) Anmeldetag: 22.01.86

(54) Verfahren zur Herstellung von Nassverfahrensphosphorsäure.

(30) Priorität: 15.02.85 DE 3505247

(43) Veröffentlichungstag der Anmeldung:
20.08.86 Patentblatt 86/34

(45) Bekanntmachung des Hinweises auf die
Patenterteilung:
13.11.91 Patentblatt 91/46

(84) Benannte Vertragsstaaten:
BE DE FR GB IT NL SE

(56) Entgegenhaltungen:
EP-A- 0 085 343
DE-C- 1 667 435
US-A- 4 132 765
US-A- 4 136 151

(73) Patentinhaber: HOECHST AKTIENGESELL-
SCHAFT
Postfach 80 03 20
W-6230 Frankfurt am Main 80(DE)

(72) Erfinder: Kolkmann, Friedrich, Dr.
Tiergartenstrasse 22e
W-5040 Brühl(DE)
Erfinder: Ressel, Herbert, Dr.
Am Kapellenbusch 29
W-5042 Erftstadt(DE)
Erfinder: Gradl, Reinhard, Dr.
Heimbacher Weg 27
W-5042 Erftstadt(DE)
Erfinder: Schimmel, Günther, Dr.
Ehrenstrasse 16
W-5042 Erftstadt(DE)

**Beschreibung**

Die vorliegende Erfindung betrifft ein Verfahren zur Herstellung von Naßverfahrensphosphorsäure durch Aufschluß von Phosphaterzen mit Hilfe einer Mineralsäure unter Bildung einer Aufschlußmaische, die anschließend in verbleibende und gebildete Feststoffe einerseits sowie die entstandene Rohphosphorsäure andererseits getrennt wird.

Üblicherweise erfolgt dieser Aufschluß unter Verwendung von Schwefelsäure, so daß je nach Reaktionsbedingungen neben der Rohphosphorsäure Calciumsulfat-Halbhydrat oder -Dihydrat entsteht. Die Abtrennung der Calciumsulfat-Verbindung erfolgt in der Regel durch Filtration mit Hilfe von Vakuumfilter-Apparaten, an die sich eine meist mehrstufige Gegenstromwaschung der abfiltrierten Feststoffe zur möglichst vollständigen Gewinnung der Phosphorsäure anschließt.

In Abhängigkeit von der Rohphosphatzusammensetzung, des Aufschlußverfahrens oder von rückgeführten Komponenten aus nachfolgenden Reinigungsoperationen (Waschwässer) entstehen dabei mehr oder weniger stark verunreinigte rohe Phosphorsäuren und in Säure unlösliche Verbindungen, die bei der Filtration zusammen mit dem Calciumsulfat abgetrennt werden.

Vor allem das in jedem Rohphosphat, neben mehr oder minder großen Mengen Aluminium enthaltene Fluor reagiert mit dem ebenfalls im Erz vorhandenen Silicium zu $SiF_6^{2-}$, das mit Alkalien und Erdalkalien schwerlösliche Hexafluorosilicate bildet. Daher wird häufig zusätzlich zur Verringerung des Fluorgehaltes in der bereits abfiltrierten Rohphosphorsäure durch Zugabe von natrium- und/oder siliciumhaltigen Verbindungen weiteres Natriumhexafluorosilicat (DE-PS 16 67 435) ausgefällt.

In der US-A-4 136 151 wird ein gemeinsamer Zusatz von $Al_2O_3$ und $SiO_2$ zur Naßverfahrensphosphorsäure vorgeschlagen. Mit diesem Zusatz wird eine Veränderung der Kristallmodifikation des ausgefällten Calciumsulfat-Dihydrates erreicht, wodurch eine bessere Filtrierbarkeit der Naßverfahrensphosphorsäure resultiert.

In der US-A-4 132 765 wird ein Verfahren beschrieben, bei welchem Fluorapatit enthaltende Phosphaterze unter Zusatz von Aluminiumverbindungen mit Mineralsäuren in wasserlösliche Fluoridkomplexe überführt werden.

Die Löslichkeit von $Na_2SiF_6$ ist stark abhängig von der $P_2O_5$-Konzentration und der Temperatur. Vor allem bei der Waschung des Calciumsulfats wild ein $P_2O_5$-Konzentrationsbereich von 0 bis 30 % und ein Temperaturbereich von etwa 20-70°C durchlaufen, so daß an verschiedenen Stellen das Löslichkeitsprodukt des $Na_2SiF_6$ über- bzw. unterschritten wird.

Dies führt jedoch in der Praxis zu erheblichen Problemen, da diese Verbindung besonders bevorzugt an Oberflächen kristallisiert und aufwächst. Dabei spielt das Material nur eine untergeordnete Rolle, so daß praktisch an allen produktberührten Flächen, also z.B. im Reaktor, im Filter, in Leitungen, an Pumpen, an meßtechnischen Einrichtungen aber auch auf oder in den Filtertüchern, Verkrustungen auftreten.

Dadurch kommt es nach mehr oder weniger kurzen Betriebszeiten zu Störungen, die den Betriebsablauf behindern oder zu Stillständen führen. Diese Produktionsunterbrechungen und Reinigungsoperationen verursachen erhebliche Kosten.

Es hat sich gezeigt, daß das Ausmaß dieser Verkrustungen, also die pro Zeit-Einheit gebildete Menge an abgeschiedenem $Na_2SiF_6$ bei sonst gleichbleibenden Verhältnissen in erster Linie abhängig von der Art des eingesetzten Rohphosphats ist. Während beispielsweise bei Verwendung von Kola-Rohphosphat die $Na_2SiF_6$-Verkrustungen in nur geringem Umfang auftreten, kommt es bei Einsatz von anderen Phosphaten bereits innerhalb kurzer Zeit, vor allem in der Filtrationsstufe, zu so starken Anbackungen, daß der Betrieb unterbrochen und entsprechende Reinigungsoperationen durchgeführt werden müssen.

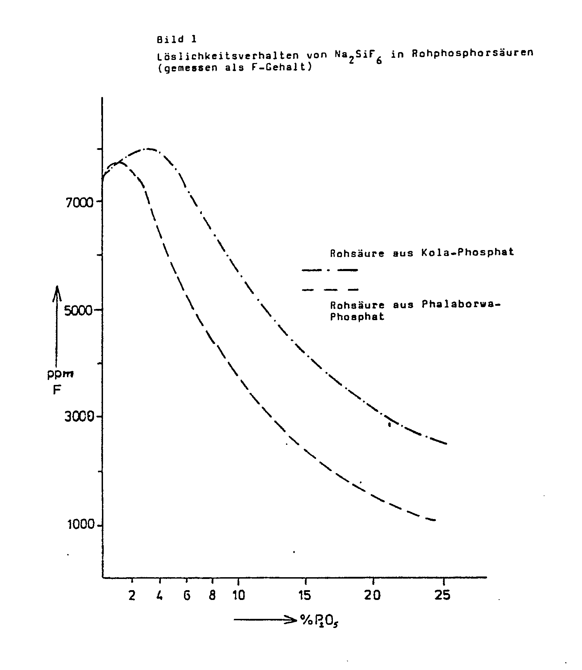

Ferner wurde festgestellt, daß die Löslichkeit des $Na_2SiF_6$ in Abhängigkeit der $P_2O_5$-Konzentration im Falle einer auf Basis Kola-Phosphat hergestellten Phosphorsäure deutlich höher ist, als beispielsweise im Falle einer auf gleiche Weise hergestellten Säure aus südafrikanischem Phalaborwa-Phosphat (Bild 1). Offensichtlich ist diese geringe Löslichkeit die Ursache für die unterschiedlich starken Verkrustungen beim Herstellprozeß der Säuren.

Es war deshalb Aufgabe der vorliegenden Erfindung, bei der Herstellung von Naßverfahrensphosphorsäure die $Na_2SiF_6$-Aus-fällungen und Verkrustungen zu vermeiden bzw. erheblich zu vermindern.

Überraschenderweise wurde gefunden, daß sich diese Aufgabe in einfacher Weise lösen läßt, wenn man bei der Herstellung der Naßverfahrensphosphorsäure entweder zum Phosphaterz oder in die Aufschlußmaische so viel einer in Phosphorsäure löslichen Aluminiumverbindung zugibt, daß sich in der Aufschlußmaische eine Aluminiumkonzentration von 0,3 bis 0,7 Gew.-% einstellt, wodurch $Na_2SiF_6$-Ausfällungen bzw. -Verkrustungen praktisch vermieden werden.

Die Zugabe der Aluminiumverbindung kann dabei entweder so erfolgen, daß man die Al-Verbindung mit dem Phosphaterz vor dem Aufschluß vermischt oder während des Aufschlusses in der Nähe der Stelle, an welcher die Phosphaterzzugabe erfolgt, zugibt. Als Al-Verbindungen sind hierzu in erster Linie Aluminiumhydroxide, -sulfate oder Aluminate geeignet, die sowohl in fester als auch in gelöster Form oder als Suspension eingesetzt werden können.

Durch die erfinderische Maßnahme werden bei Säuren, die ein niedriges Al/F-Molverhältnis aufweisen, die Verkrustungen von $Na_2SiF_6$ praktisch vermieden bzw. auf ein so geringes Maß reduziert, so daß Störungen im Betriebsablauf vermieden bzw. die üblichen Standzeiten erreicht werden.

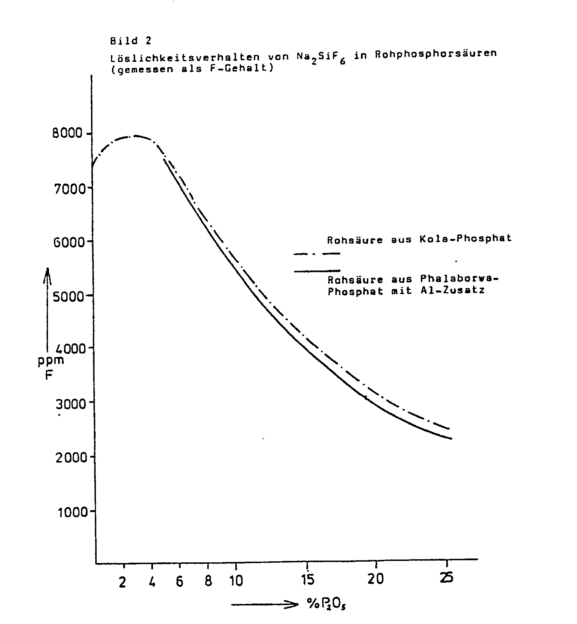

Wie ein Vergleich von Bild 1 mit Bild 2 zeigt, werden durch Zusatz Aluminium zu einem Phosphaterz mit relativ niedrigem Al-Gehalt (Phalaborwa-Phosphat) Säuren gewonnen, in denen $Na_2SiF_6$ ein etwa gleich gutes Löslichkeitsverhalten aufweist wie in Säuren aus Kola-Phosphat mit relativ hohem Al-Gehalt, die sich gut verarbeiten lassen.

Ohne den Erfindungsgegenstand darauf beschränken zu wollen, soll das Wesen der vorliegenden Erfindung an den nachfolgenden Beispielen näher erläutert werden.

Beispiel 1 (Vergleichsbeispiel)

20 t/h Kola-Rohphosphat wurden mit 71 t/h Rezirkulationssäure und 18,5 t/h konzentrierte Schwefelsäure bei ca. 72°C in einem Single-Tank aufgeschlossen. Nach einer Verweilzeit von ca. 6 Stunden wurde die Rohphosphorsäure einem Kipp-Pfannen-Filter (Tilting-pan filter) abfiltriert. Der Al-Gehalt in der Aufschlußmaische betrug 0,96 Gew%, bezogen auf $P_2O_5$.

Der Betriebsablauf erfolgte ohne Störungen. Die Verkrustungen mit $Na_2SiF_6$ beschränkten sich auf die Filtratablaufleitungen in der Waschzone und betrugen beispielsweise in der Ablaufleitung des Waschfiltrates mit 25% $P_2O_5$ nach 30 Tagen ca. 4,5 mm.

Beispiel 2 (Vergleichsbeispiel)

Wie in Beispiel 1 wurden 20 t/h südafrikanisches Phalaborwa-Phosphat (Palfos 86) in gleicher Weise zu Rohphosphorsäure aufgeschlossen. Es entstand eine Maische mit einem Al-Gehalt von 0,17 Gew%, bezogen auf $P_2O_5$. Bereits nach 2 Tagen kam es jedoch in praktisch allen Leitungen aber auch auf dem Filtertuch zu erheblichen $Na_2SiF_6$-Verkrustungen, die zunächst die Filtrationsleistung stark verminderten und schließlich zum Betriebsstillstand führten. Vergleichsweise zu Beispiel 1 betrug die $Na_2SiF_6$-Verkrustung in der Vor Versuchsbeginn vollständig gesäuberten Ablaufleitung des 25 %igen Waschfiltrats bereits nach 3 Tagen 8 mm.

Beispiel 3

Wie in Beispiel 2 wurden 20 t/h Palfos-Phosphat verarbeitet, jedoch mit dem Unterschied, daß gleichzeitig in den Reaktor pro Stunde 138,0 kg feuchtes $Al(OH)_3$ ($\triangleq$ 42,0 kg/h Al) eindosiert wurden, so daß eine Aufschlußmaische mit einem Al-Gehalt von 0,32 Gew.-%, bezogen auf $P_2O_5$, entstand. Die Verkrustungen durch $Na_2SiF_6$ waren ähnlich gering wie im Beispiel 1, wodurch sich etwa gleich lange Betriebszeiten ergaben.

Beispiel 4 (Vergleichsbeispiel)

Mit diesem Beispiel wird belegt, daß die Löslichkeit von $Na_2SiF_6$ in Phosphorsäure nach Aluminiumzugaben deutlich höher liegt.

Durch Aufschluß von marokkanischem Bu-craa-Phosphaterz ohne Zusatz einer Al-Verbindung wurde eine Rohphosphorsäure erhalten, die 26 Gew.-% $P_2O_5$, 0,146 Gew.-% F und 0,076 Gew.-% Al enthielt.

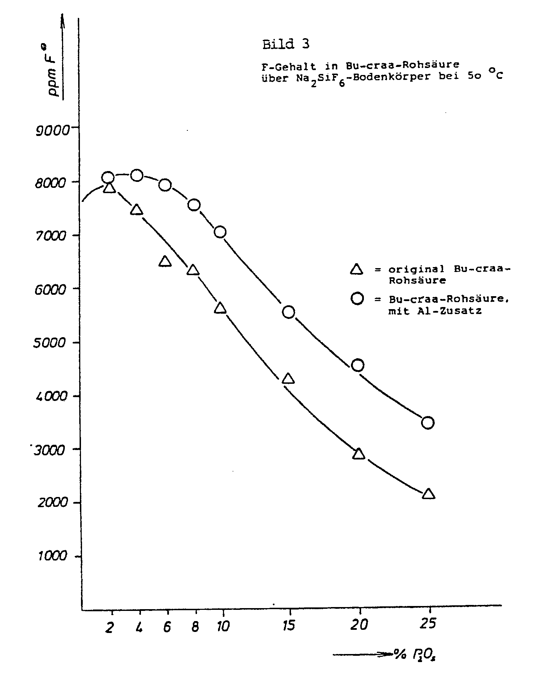

Unter gleichen Bedingungen, jedoch mit Zugabe von so viel $Al(OH)3$ zur Aufschlußmaische, daß letztere 0,80 Gew.-% Al, bezogen auf $P_2O_5$, enthielt, wurde eine zweite Rohsäure hergestellt, die sich von der ersten durch einen höheren Al-Gehalt von 0,32 Gew.-% in der Säure unterschied. Die Löslichkeit von $Na_2SiF_6$-Säuren, die aus dieser Al-dotierten Rohsäure in unterschiedlichen Verdünnungen hergestellt worden waren, war, verglichen mit entsprechenden Säuren aus der nicht dotierten Rohsäure, deutlich höher, wie Bild 3 zeigt.

**Patentansprüche**

1. Verfahren zur Herstellung von Naßverfahrensphosphorsäure durch Aufschluß von Phosphaterzen mit Hilfe einer Mineralsäure unter Bildung einer Aufschlußmaische, die anschließend in verbleibende und gebildete Feststoffe einerseits sowie die entstandene Rohphosphorsäure andererseits getrennt wird, wobei man entweder zum Phosphaterz oder in die Aufschlußmaische so viel einer in Phosphorsäure löslichen Aluminiumverbindung zugibt, daß sich in der Aufschlußmaische eine Aluminiumkonzentration von 0,3 bis 0,7 Gew.-%, bezogen auf $P_2O_5$, einstellt, wodurch $Na_2SiF_6$-Ausfällungen bzw. -Verkrustungen praktisch vermieden werden.

2. Verfahren nach Anspruch 1, dadurch gekennzeichnet, daß man die Aluminiumverbindung mit dem Phosphaterz vor dem Aufschluß vermischt.

3. Verfahren nach Anspruch 1 oder 2, dadurch gekennzeichnet, daß man die Aluminiumverbindung während des Aufschlusses in der Nähe der Stelle, an welcher die Phosphaterzzugabe erfolgt, zugibt.

4. Verfahren nach einem der Ansprüche 1 bis 3, dadurch gekennzeichnet, daß man als Aluminiumverbindung Aluminiumhydroxide, -sulfate oder Aluminate einsetzt.

**Claims**

1. A process for the preparation of wet-process phosphoric acid by digesting phosphate ores using a mineral acid to form a digestion mash, which is subsequently separated into residual and formed solids on the one hand and the resultant crude phosphoric acid on the other hand, which comprises adding sufficient of an aluminum compound which is soluble in phosphoric acid to the phosphate ore or to the digestion mash so that an aluminum concentration of from 0.3 to 0.7 % by weight, based on $P_2O_5$, is produced in the digestion mash, thus virtually preventing precipitation or en-crustation of $Na_2SiF_6$.

2. The process as claimed in claim 1, wherein the aluminum compound is mixed with the phosphate ore before the digestion.

3. The process as claimed in claim 1 or 2, wherein the aluminum compound is added during the digestion in the region of the point at which the phosphate ore is added.

4. The process as claimed in any one of claims 1 to 3, wherein the aluminum compound employed is an aluminum hydroxide or sulfate or an aluminate.

**Revendications**

1. Procédé de préparation d'un acide phosphorique par voie humide par attaque de minerais de phosphates à l'aide d'un acide minéral avec formation d'une bouillie d'attaque qui est ensuite séparée d'une part en les matières solides résiduelles et formées, et d'autre part en l'acide phosphorique brut, dans lequel : on ajoute soit au minerai de phosphate, soit à la bouillie d'attaque, un composé de l'aluminium soluble dans l'acide phosphorique en quantité telle que la bouillie d'attaque présente une concentration en aluminium de 0,3 à 0,7 % en poids, par rapport à $P_2O_5$, ce qui évite prati-quement les précipitations et incrustations de $Na_2SiF_6$.

2. Procédé selon la revendication 1, caractérisé en ce que l'on mélange le composé de l'aluminium au minerai de phosphate avant l'attaque.

3. Procédé selon la revendication 1 ou 2, caractérisé en ce que l'on introduit le composé de l'aluminium pendant l'attaque, au voisinage de l'endroit où l'on introduit le minerai de phosphate.

4. Procédé selon l'une des revendications 1 à 3, caractérisé en ce que l'on utilise en tant que composé de l'aluminium un hydroxyde ou un sulfate d'aluminium ou un aluminate.

Bild 1

Löslichkeitsverhalten von $Na_2SiF_6$ in Rohphosphorsäuren
(gemessen als F-Gehalt)

EP 0 191 325 B1

Bild 2

Löslichkeitsverhalten von $Na_2SiF_6$ in Rohphosphorsäuren
(gemessen als F-Gehalt)

EP 0 191 325 B1

Bild 3

F-Gehalt in Bu-craa-Rohsäure
über $Na_2SiF_6$-Bodenkörper bei 5o °C

$\triangle$ = original Bu-craa-Rohsäure

$\bigcirc$ = Bu-craa-Rohsäure, mit Al-Zusatz